# EUROPÄISCHE PATENTSCHRIFT

(11) **EP 3 668 661 B1**
(45) Veröffentlichungstag und Bekanntmachung des Hinweises auf die Patenterteilung: **24.02.2021**
(21) Anmeldenummer: 18755757.4
(22) Anmeldetag: 09.08.2018
(51) Int. Cl.: B21B 35/00

(54) **VERFAHREN UND VORRICHTUNG ZUR ELEKTRISCHEN BREMSUNG MIT MECHANISCHER HALTEVORRICHTUNG FÜR EINEN DIREKTANTRIEB BEI DER METALLBEARBEITUNG**
METHOD AND DEVICE FOR ELECTRICAL DECELERATION HAVING A MECHANICAL STOPPING DEVICE FOR DIRECT DRIVE DURING METAL PROCESSING
PROCÉDÉ ET DISPOSITIF POUR LE FREINAGE ÉLECTRIQUE POURVUS D'UN DISPOSITIF DE RETENUE MÉCANIQUE POUR UN ENTRAÎNEMENT DIRECT LORS DU TRAVAIL DES MÉTAUX

(30) Priorität: 18.08.2017 DE 102017214416
(43) Veröffentlichungstag der Anmeldung: 24.06.2020
(73) Patentinhaber: SMS Group GmbH, 40237 Düsseldorf (DE)
(72) Erfinder: DE KOCK, Peter, 46117 Oberhausen (DE); PLATE, Frank, 40589 Düsseldorf (DE); TIMMERBEUL, Walter, 42281 Wuppertal (DE)
(74) Vertreter: Kross, Ulrich
(86) Internationale Anmeldenummer: PCT/EP2018/071594
(87) Internationale Veröffentlichungsnummer: WO 2019/034512

(56) Entgegenhaltungen:
- WO-A2-2012/119897
- DE-A- 2 810 273
- DE-A1- 10 339 733
- DE-A1-102007 058 098
- DE-C- 714 475
- GB-A- 514 449
- US-B2- 8 026 681

## Beschreibung

### Technisches Gebiet

Die Erfindung betrifft ein Verfahren und eine Vorrichtung zum Abbremsen einer Maschine, die einen Antrieb, vorzugsweise einen Direktantrieb, mit einem Elektromotor und eine Arbeitsmaschine für die Metallbearbeitung, aufweist Ein gattungsgemässes Verfahren sowie eine gattungsgemässe Vorrichtung sind aus Dokument DE 714 475 C bekannt.

### Hintergrund der Erfindung

In verschiedenen Bereichen der Metallbearbeitung, beispielsweise bei Walz- und Prägewerken, gibt es eine technologische Trennung zwischen den mechanischen Einrichtungen oder Werkzeugen, wie etwa Walzen, Stützrollen oder Spannrollen, und den elektrischen Antrieben. Diese Trennung ist historisch begründet und führt dazu, dass die Schnittstellen zwischen den mechanischen und elektrischen Einrichtungen nicht optimal sind.

Getriebe, Kupplungen, Bremsen, Kardanwellen und andere mechanische Komponenten zwischen dem Antrieb und der anzutreibenden Arbeitsmaschine stehen einer besseren Integration sowie damit verbundenen Vorteilen - wie etwa einer Verbesserung der Energieeffizienz und Zuverlässigkeit, Verkleinerung der Anlage usw. - entgegen.

Viele Arbeitsmaschinen in der metallverarbeitenden Industrie sind mit mechanischen Bremsen ausgestattet. Diese muss bis zu 100% des Motormomentes halten können, um die Maschine, etwa in einem Notfall, rasch zum Stillstand zu bringen. Es besteht zusätzlich die Möglichkeit, das Stillstandsmoment durch eine geeignete elektrische Schaltung dauerhaft aufrecht zu halten. Derartige Haltebremsen werden gegenwärtig am Motorläufer, meist zwischen Motor und Getriebe, oder an der Rückseite des Motors platziert. Eine solche Bremse steht als separate Komponente einer höheren Integration zwischen den mechanischen und elektrischen Einrichtungen entgegen.

Wenn kompakte Antriebskonzepte angestrebt werden, etwa indem der elektrische Antrieb direkt auf der Antriebswelle montiert, die Haltebremse integraler Bestandteil des Motors oder sogar im Gehäuse des Motors eingebaut ist, müssen auf engem Raum sehr hohe Drehmomente gehalten werden können. Herkömmliche Bremszangen, die für hohe Bremsmomente einen großen Bauraum erfordern, stehen kompakten Antriebskonzepten, insbesondere einer engen Integration des Antriebs und der Arbeitsmaschine entgegen.

### Darstellung der Erfindung

Eine Aufgabe der Erfindung besteht darin, ein Verfahren und eine Vorrichtung zum Abbremsen einer Maschine, die einen Antrieb mit einem Elektromotor und eine Arbeitsmaschine, vorzugsweise eine Arbeitsmaschine für die Metallbearbeitung, aufweist, bereitzustellen, mit denen bei geringem Bauraum ein zuverlässiges Abbremsen und Halten hoher Drehmomente realisierbar ist.

Gelöst wird die Aufgabe mit einem Verfahren mit den Merkmalen des Anspruchs 1 sowie einer Vorrichtung mit den Merkmalen des Anspruchs 4. Vorteilhafte Weiterbildungen folgen aus den Unteransprüchen, der folgenden Darstellung der Erfindung sowie der Beschreibung bevorzugter Ausführungsbeispiele.

Das erfindungsgemäße Verfahren (auch als "Halteverfahren" bezeichnet) dient zum Abbremsen einer Maschine, die einen Antrieb, vorzugsweise einen Direktantrieb, mit einem Elektromotor und eine Arbeitsmaschine, vorzugsweise eine Arbeitsmaschine für die Metallbearbeitung, aufweist, wobei der Antrieb eingerichtet ist, um eine Welle der Arbeitsmaschine drehbar anzutreiben. Der Elektromotor ist vorzugsweise ein Synchronmotor oder Torquemotor, die zur Realisierung eines Direktantriebs besonders geeignet sind, da sie hohe Drehmomente bei relativ kleinen Drehzahlen erzeugen können. In vielen Fällen kann dann beispielsweise auf ein Untersetzungsgetriebe verzichtet werden, wodurch der Antriebsstrang vereinfacht und die Maschine kompakter realisiert werden kann.

Die vom Antrieb anzutreibende Arbeitsmaschine kann auf vielerlei Weise ausgeführt sein. Besonders bevorzugt weist sie eine oder mehrere Arbeitswalzen, Stützwalzen, Spannrollen und/oder Transportrollen in einem Walzwerk auf. Vorzugsweise ist die Arbeitsmaschine eine Haspelanlage, Beschichtungsanlage, eine Zuschneidemaschine mit einer oder mehreren fliegenden Scheren oder ein Vertikal- oder Horizontalspeicher mit zumindest einer Winde.

Gemäß dem erfindungsgemäßen Verfahren wird die Maschine aus einem Arbeitszustand in einen Haltezustand, in dem die Welle der Arbeitsmaschine im Wesentlichen stillsteht, abgebremst. Das Abbremsen erfolgt reibungsfrei mittels einer elektrischen Bremseinrichtung. Unter "reibungsfrei" ist hierbei die Abwesenheit von mechanischer Reibung zu verstehen, das Abbremsen erfolgt in diesem Sinne berührungslos. Materialinnere Prozesse, die beim elektrischen Bremsen auftreten können, wie etwa Gegen- oder Wirbelströme, fallen folglich nicht unter die Bezeichnungen "Reibung", "reibungsfrei" und dergleichen. Vorzugsweise wird der Elektromotor in einem Normalbetriebszustand an der geregelten Rampe eines speisenden Umrichters, der den Elektromotor mit Leistung versorgt, etwa durch Anpassung der Frequenz und Spannung, abgebremst. Die elektrische Bremseinrichtung, die beispielsweise als Gegenstrombremse oder Wirbelstrombremse ausgeführt sein kann, arbeitet reibungslos und somit im Wesentlichen verschleißfrei.

Nachdem die Maschine durch das Abbremsen mittels der elektrischen Bremseinrichtung den Haltezustand erreicht hat, wird die Maschine durch Betätigen einer mechanischen Halteeinrichtung mechanisch arretiert. Die Arretierung erfolgt vorzugsweise auf eine kraftschlüssige oder formschlüssige Weise. Die mechanische Halteeinrichtung kann beispielsweise über Haltebacken auf eine Haltescheibe wirken, sie kann an der Welle der Arbeitsmaschine oder auch am Rotor des Elektromotors vorgesehen sein.

Die elektrische Bremseinrichtung und die mechanische Halteeinrichtung werden nun so gesteuert, dass im Wesentlichen die gesamte Bewegungsenergie von der elektrischen Bremseinrichtung abgebaut bzw. umgewandelt wird, während die mechanische Halteeinrichtung nur im Haltezustand der Maschine betätig wird. Die mechanische Halteeinrichtung hat somit die technische Funktion, die Arbeitsmaschine im Haltezustand, d.h. in der Stillstandposition zu fixieren bzw. zu arretieren, ohne dass sie Bewegungsenergie durch Reibung abbaut.

Die mechanische Halteeinrichtung kann demzufolge besonders kompakt ausgeführt werden, da sie im Wesentlichen keine Bewegungsenergie umwandeln muss. Sie weist keine Verschleißteile auf, zumindest findet ein Verschleiß nur in geringem Maß statt. Ferner wird vermieden, dass Abriebpartikel von der mechanischen Halteeinrichtung in den Antrieb eindringen können. Wenn somit davon die Rede ist, dass die Welle der Arbeitsmaschine im Haltezustand "im Wesentlichen" stillsteht oder "im Wesentlichen" die gesamte Bewegungsenergie von der elektrischen Bremseinrichtung umgewandelt wird, dann ist damit gemeint, dass die elektrische Bremseinrichtung zum Abbau der gesamten Bewegungsenergie aus dem Arbeitszustand ausgelegt ist, während die mechanische Halteeinrichtung diesbezüglich keinen Beitrag leistet. Kleine Energien aus einer Kriechbewegung etwa, aus Erschütterungen und dergleichen können hingegen von der mechanischen Halteinrichtung aufgenommen und umgewandelt werden.

Erfindungsgemäss ist ein speisender Umrichter vorgesehen, der den Elektromotor des Antriebs im Arbeitszustand mit Leistung versorgt und vorzugsweise die oben erwähnte Funktion zum Abbremsen der Arbeitsmaschine in einem Normalbetriebszustand aufweist. In einem außerordentlichen Betriebszustand wird der speisende Umrichter zum Abbremsen galvanisch vom Elektromotor getrennt und die Maschine in den Haltezustand gebracht, indem Wicklungen des Elektromotors über einen Bremswiderstand oder eine Widerstand/Kondensator-Schaltung oder direkt kurzgeschlossen werden oder eine externe Gleichspannungsquelle aufgeschaltet wird. Die mechanische Halteeinrichtung muss somit auch in einem außerordentlichen Betriebszustand, etwa bei einer Störung des speisenden Umrichters, keine Bewegungsenergie aus dem Arbeitszustand in den Haltezustand umwandeln. Die gesamte Bewegungsenergie der Arbeitsmaschine und des Antriebs wird vorzugsweise in allen Betriebszuständen - beispielsweise Halt, Schnellhalt, Not-Halt, Not-Aus - von der elektrischen Bremseinrichtung umgewandelt. Die mechanische Halteeinrichtung übernimmt somit vorzugsweise in jedem Fall - auch im Notfall - lediglich die technische Funktion, die Arbeitsmaschine in der Stillstandposition zu fixieren bzw. zu arretieren.

Vorzugsweise erfolgt die Betätigung der mechanischen Halteeinrichtung elektrisch, mechanisch, hydraulisch oder pneumatisch. Haltebacken, Haltescheibe, Kolben, Hydraulik- bzw. Pneumatikzylinder und Leitungen, Halteklammern, Haltestift - all solche Komponenten, die zum Aufbau der mechanischen Halteeinrichtung geeignet sind, können für geringe Kräfte ausgelegt und somit kompakt, leicht und kostengünstig realisiert werden.

Die oben dargelegte Aufgabe wird ferner mit einer Vorrichtung (auch als "Haltevorrichtung" bezeichnet) gelöst, die zum Abbremsen einer Maschine vorgesehen ist. Die Maschine weist einen Antrieb, vorzugsweise einen Direktantrieb, mit einem Elektromotor und eine Arbeitsmaschine, vorzugsweise eine Arbeitsmaschine für die Metallbearbeitung, auf, wobei der Antrieb eingerichtet ist, um eine Welle der Arbeitsmaschine drehbar anzutreiben. Die Vorrichtung weist auf: eine elektrische Bremseinrichtung, die eingerichtet ist, um die Maschine aus einem Arbeitszustand reibungsfrei in einen Haltezustand, in dem die Welle der Arbeitsmaschine im Wesentlichen stillsteht, abzubremsen; eine mechanische Halteeinrichtung, die eingerichtet ist, um die Maschine bei Betätigung der mechanischen Halteeinrichtung im Haltezustand mechanisch zu arretieren; und eine Steuereinrichtung, die eingerichtet ist, um die elektrische Bremseinrichtung und die mechanische Halteeinrichtung so zu steuern, dass im Wesentlichen die gesamte Bewegungsenergie von der elektrischen Bremseinrichtung umgewandelt wird, während die mechanische Halteeinrichtung nur im Haltezustand der Maschine betätig wird.

Die Ausführungsformen, technischen Wirkungen und Vorteile, die mit Bezug auf das Verfahren beschrieben sind, gelten analog für die Vorrichtung - und umgekehrt.

Vorzugsweise weist der Antrieb einen speisenden Umrichter auf, der eingerichtet ist, um den Elektromotor des Antriebs im Arbeitszustand mit Leistung zu versorgen. Der speisende Umrichter ist vorzugsweise so eingerichtet, dass durch diesen in einem Normalbetriebszustand ferner eine Funktion zum Abbremsen der Arbeitsmaschine realisierbar ist, beispielsweise durch Anpassung der Frequenz und Spannung. Die elektrische Bremseinrichtung und/oder die Steuereinrichtung ist vorzugsweise so eingerichtet, dass sie in einem außerordentlichen Betriebszustand im Fall des Abbremsens den speisenden Umrichter galvanisch vom Elektromotor trennt und die Maschine in den Haltezustand abbremst, indem sie Wicklungen des Elektromotors über einen Bremswiderstand oder eine Widerstand/Kondensator-Schaltung oder direkt kurzschließt oder eine externe Gleichspannungsquelle aufschaltet. Der außerordentliche Betriebszustand umfasst beispielsweise eine Störung des speisenden Umrichters.

Der speisende Umrichter kann weitere Funktionen zur Motorsteuerung umfassen, vorzugsweise eine Drehzahlmessung und/oder ein Verfahren zur Anpassung des Drehfelds in Abhängigkeit vom aktuellen Zustand der Maschine.

Vorzugsweise weisen die Arbeitsmaschine ein Gehäuse oder Gestell und der Antrieb einen Stator und einen Rotor auf, wobei der Stator direkt am Gehäuse bzw. Gestell befestigt ist. Der Rotor ist mit der Welle verbunden, wodurch die Drehung des Rotors auf die Welle übertragen wird. Bei einer "direkten Befestigung" oder synonym "integralen Befestigung" im Sinne der vorliegenden Anmeldung stehen die betreffenden mechanischen Komponenten auf eine unmittelbare Weise miteinander in Kontakt. Dies kann beispielsweise durch Verschrauben, Vernieten oder Verschweißen erreicht werden, aber auch eine einstückige Ausbildung ist umfasst. Das Gehäuse oder Gestell und der Antrieb sind auf diese Weise miteinander "verblockt". Durch diese besondere Integration wird einerseits eine ausgesprochen hohe Drehsteifigkeit zwischen dem Elektromotor und der Welle bzw. der Arbeitsmaschine erzielt, auf der anderen Seite können aufwendige mechanische Komponenten, wie etwa Getriebe, Kupplungen, Kardanwellen usw. im Antriebsstrang entfallen. Aus diesen Gründen ist der Rotor vorzugsweise direkt mit der Welle der Arbeitsmaschine verbunden, vorzugsweise sind der Rotor und die Welle einstückig ausgebildet. Aufgrund dieser direkten Verbindung zwischen dem Rotor des Antriebs und der Welle kann auf ein oder mehrere Drehlager verzichtet werden, wobei sich die Welle und der Rotor beispielsweise ein Drehlager im Antrieb oder außerhalb des Antriebs teilen.

Vorzugsweise weist der Antrieb ein Gehäuse auf, in dem die mechanische Halteeinrichtung integriert oder an das die mechanische Halteeinrichtung angeflanscht ist. Die mechanische Halteeinrichtung sowie die elektrische Bremseinrichtung können Teile oder Module eines Motorbaukastens für den Antrieb sein. Der besonders kompakte und optional modulare Aufbau wird durch das erfindungsgemäße Halteverfahren ermöglicht.

Der dargelegte Antrieb fungiert besonders bevorzugt als Direktantrieb, wodurch die Komplexität herkömmlicher Antriebsstränge (bestehend beispielsweise aus einem Elektromotor, einer Motorkupplung inkl. Bremse, einem Untersetzungsgetriebe und einer Maschinenkupplung) reduziert werden kann. Dabei befindet sich der Antrieb vorzugsweise direkt an oder in der Arbeitsmaschine. Bei einem derartigen Direktantrieb müssen, wie oben dargelegt, teilweise sehr hohe Drehmomente von einer Bremse gehalten werden können. Während herkömmliche Bremszangen dafür einen großen Bauraum erfordern, ist die beschriebene Kombination aus der elektrischen Bremseinrichtung und der mechanischen Halteeinrichtung zur Verwendung mit einem Direktantrieb optimal geeignet.

Wenngleich die Erfindung besonders bevorzugt im technischen Umfeld der Metallbearbeitung, in der Stahl- und NE-Industrie, zum Einsatz kommt - beispielsweise zum Antrieb von Arbeits- und/oder Stützwalzen in einem Walzwerk, von Spannrollen oder Transportrollen, in Haspelanlagen, Beschichtungsanlagen, fliegenden Scheren, Winden in einem Vertikal- oder Horizontalspeicher, usw. -, kann die Erfindung auch in anderen Bereichen umgesetzt werden. Diesbezüglich seien beispielhaft Anwendungen in Papiermaschinen, Textilmaschinen, bei der Verarbeitung von Gummi und Kunststoff, und allgemein in der Grundstoffindustrie genannt.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung der bevorzugten Ausführungsbeispiele erfolgt dabei unter Bezugnahme auf die begleitende Zeichnung.

### Kurze Beschreibung der Figur

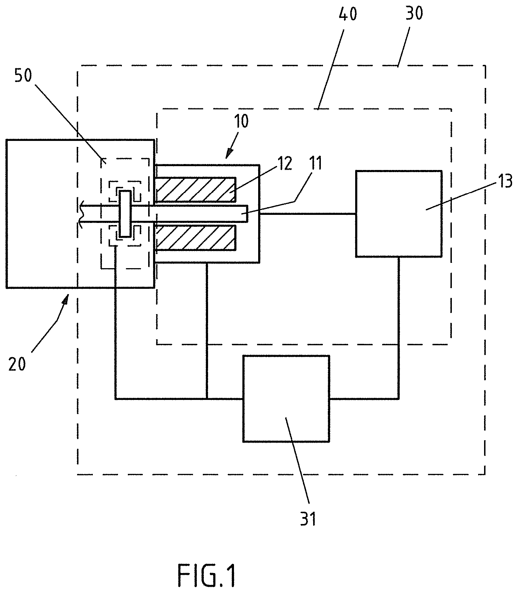

Die Figur 1 zeigt schematisch den Aufbau einer Maschine, die einen Direktantrieb mit einem Elektromotor, eine vom Direktantrieb anzutreibende Arbeitsmaschine sowie eine Vorrichtung zum Abbremsen der Maschine aufweist.

### Detaillierte Beschreibung bevorzugter Ausführungsbeispiele

Im Folgenden werden bevorzugte Ausführungsbeispiele anhand der Figur 1 beschrieben.

Die Figur 1 zeigt schematisch den Aufbau einer Maschine, die einen Antrieb 10 mit einem Elektromotor, eine vom Antrieb 10 anzutreibende Arbeitsmaschine 20 sowie eine Haltevorrichtung 30 zum Abbremsen der Maschine aufweist. Die Haltevorrichtung 30 weist eine elektrische Bremseinrichtung 40 und eine mechanische Halteeinrichtung 50 auf.

Die vom Antrieb 10 anzutreibende Arbeitsmaschine 20 kann auf vielerlei Weise ausgeführt sein, beispielweise als eine oder mehrere Arbeits- und/oder Stützwalzen in einem Walzwerk, Spannrollen oder Transportrollen, als Haspelanlage, Beschichtungsanlage, fliegende Scheren, Winden in einem Vertikal- oder Horizontalspeicher usw..

Der Elektromotor, vorzugsweise ein Synchronmotor oder Torquemotor, des Antriebs 10 weist einen Rotor 11 und einen Stator 12 auf, der vorzugsweise direkt an einem Gestell oder Gehäuse der Arbeitsmaschine 20 befestigt ist. Der Rotor 11 ist mit einer Welle der Arbeitsmaschine 20 verbunden, wodurch die Drehung des Rotors 11 auf die Welle und damit auf bewegliche Teile der Arbeitsmaschine 20 übertragen wird. Bei einer "direkten" Befestigung oder Verbindung oder synonym "integralen" Befestigung oder Verbindung im Sinne der vorliegenden Anmeldung stehen die betreffenden mechanischen Komponenten auf eine unmittelbare Weise miteinander in Kontakt. Dies kann beispielsweise durch Verschrauben, Vernieten oder Verschweißen erreicht werden, aber auch eine einstückige Ausbildung ist umfasst. Die Arbeitsmaschine 20 und der Antrieb 10 sind auf diese Weise miteinander "verblockt". Durch diese besondere Integration wird eine ausgesprochen hohe Drehsteifigkeit zwischen dem Antrieb 10 und der Welle der Arbeitsmaschine 20 erzielt.

Die enge integrale Verbindung zwischen dem Antrieb 10 und der Arbeitsmaschine 20 erlaubt einen bauraumsparenden Anlagenbau. Damit gehen Vereinfachungen beim Anlagenbau einher, beispielsweise durch eine Fundamenteinsparung, eine bessere Zugänglichkeit der Anlage, eine Verringerung der Reserveteile, eine Verringerung des Wartungsaufwands, eine Verkleinerung der Halle. Die Motoren sind nicht oder weniger durch Bunde oder andere herabfallende Teile gefährdet. Ein großer Vorteil des hier dargestellten Antriebskonzepts wird bei der thermischen Auslegung der Motoren deutlich. Durch die innige Verbindung des Antriebs 10 mit der Arbeitsmaschine 20 kann die Masse und die Oberfläche der mechanischen Einrichtung zur Wärmeableitung mitgenutzt werden. Die Leistung des Elektromotors kann dadurch ohne bauliche Maßnahmen gesteigert werden. Die Verlustleistung des Antriebsstrangs wird erheblich reduziert. Auf eine Fremdlüftung oder Wasserkühlung kann in vielen Fällen verzichtet werden. Der Antrieb 10 kann als Innenläufer oder Außenläufer konzipiert sein. Das Integralkonzept bietet zudem Verbesserungen im Hinblick auf die Sicherheit, da auf drehende äußere Antriebsteile, wie etwa Gelenkwellen, Kupplungen, Bremsscheiben usw., verzichtet werden kann. Es entfallen Bauteile wie Lager, Wellen, Kupplungen, Motoruntersätze, Getriebeuntersätze usw.. Eine Verringerung der sich bewegenden Teile hat zudem eine höhere Regelgenauigkeit zur Folge, was sich wiederum positiv auf die Qualität der herzustellenden Produkte auswirkt.

Die Haltevorrichtung 30 weist eine Steuereinrichtung 31 auf, welche die elektrische Bremseinrichtung 40, die mechanische Halteeinrichtung 50 sowie gegebenenfalls Funktionen des Antriebs 10 und/oder seines speisenden Umrichters 13 steuert. Im Folgenden werden Steuerfunktionen der Steuereinrichtung 31 für verschiedene Betriebszustände, insbesondere den Normalbetriebszustand und einen außerordentlichen Betriebszustand, beschrieben:
Zum Abbremsen oder Anhalten der Arbeitsmaschine 20 ist die Haltevorrichtung 30 vorgesehen, welche die elektrische Bremseinrichtung 40 und die mechanische Halteeinrichtung 50 aufweist. Hierbei findet die Steuerung über die Steuereinrichtung 31 so statt, dass die elektrische Bremseinrichtung 40 die Abbremsung der Arbeitsmaschine 20 auf eine reibungsfreie Weise bis zum Stillstand oder nahezu bis zum Stillstand übernimmt, während die mechanische Halteeinrichtung 50 die Arbeitsmaschine 20 nach Erreichen der Stillstandposition arretiert bzw. hält. Das kann durch eine formschlüssige oder auch kraftschlüssige Verbindung geschehen, etwa mittels einer auf dem Rotor 11 oder der Welle der Arbeitsmaschine 20 mitlaufenden Bremsscheibe, an die Bremsbeläge beidseitig gepresst werden. Die Ansteuerung kann beispielsweise elektrisch, mechanisch, hydraulisch oder pneumatisch erfolgen. Ein geringes Abbremsen von einem fast stillstehenden Zustand der Arbeitsmaschine 20 bis zum absoluten Stillstand kann von der mechanischen Halteeinrichtung 50 übernommen werden, wie es oben dargelegt ist.

Im Normalbetriebszustand wird der Antrieb 10 an der geregelten Rampe (Frequenz, Spannung) eines speisenden Umrichters 13 abgebremst. Dieser speisende Umrichter 13, der den Motor des Antriebs 10 mit Leistung versorgt, ist ein elektronisches Gerät und kann Teil des Antriebs 10, Teil der Arbeitsmaschine 20 oder auch ein eigenständiges Bauteil sein. Der Elektromotor des Antriebs 10 kann als Drehstrommotor ausgelegt sein. Der Umrichter 13 kann neben der Leistungsversorgung zusätzliche Funktionen zur Motorsteuerung umfassen, wie beispielsweise eine Drehzahlmessung und/oder Verfahren zur Anpassung des Drehfelds in Abhängigkeit vom aktuellen Zustand der Maschine. Insbesondere umfasst der Umrichter 13 eine Funktion zum Abbremsen der Arbeitsmaschine durch Anpassen der Frequenz und Spannung bis zum Stillstand der Arbeitsmaschine 20.

Bei einer Störung des Umrichters 13 ist ein Abbremsen des Antriebs 10 bzw. der Arbeitsmaschine 20 auf diese Weise nicht möglich. Die elektrische Bremseinrichtung 40 ist so eingerichtet, dass in diesem Fall der Umrichter 13 galvanisch vom Motor des Antriebs 10 getrennt wird, gleichzeitig die Motorwicklungen über einen Bremswiderstand, eine Widerstand/Kondensator-Schaltung oder direkt kurzgeschlossen werden oder eine externe Gleichspannungsquelle aufgeschaltet wird. Auf diese Weise wird im Notfall sichergestellt, dass die Arbeitsmaschine 20 rasch abgebremst werden kann.

Insbesondere erlaubt der oben dargelegte Aufbau der elektrischen Bremseinrichtung 40 ein reibungsfreies, d.h. nicht-mechanisches Abbremsen der Arbeitsmaschine 20 nicht nur im Normalbetrieb, sondern auch im Fall einer Störung des speisenden Umrichters 13. Die gesamte Bewegungsenergie der Arbeitsmaschine 20 und des Antriebs 10 wird in allen Betriebszuständen - beispielsweise Halt, Schnellhalt, Not-Halt, Not-Aus - von der elektrischen Bremseinrichtung 40 abgebaut bzw. umgewandelt. Die mechanische Halteeinrichtung 50 übernimmt nun in jedem Fall (auch im Notfall) lediglich die Aufgabe, die Arbeitsmaschine 20 in der Stillstandposition zu fixieren. Durch das Abbremsen der Arbeitsmaschine 20 allein aufgrund der elektrischen Bremseinrichtung 40 in allen Betriebszuständen wird die Energie von der mechanischen Halteeinrichtung 50 nicht in Wärme umgewandelt. Es wird keine Energie in Reibung umgewandelt, und dies gilt nicht nur für den Normalbetrieb, sondern insbesondere auch bei einer Störung des speisenden Umrichters 13. Die mechanische Halteeinrichtung 50 kann demzufolge besonders kompakt ausgeführt werden, da sie auch im Notfall keine Bewegungsenergie umwandeln muss. Außerdem weist die mechanische Halteeinrichtung 50 dadurch keine Verschleißteile auf, zumindest findet ein Verschleiß nur in geringem Maß statt.

Damit wird ferner vermieden, dass Abriebelemente von der mechanischen Halteeinrichtung 50 in den Antrieb 10 eindringen können. Vorzugsweise ist die mechanische Halteeinrichtung 50 im Gehäuse des Antriebs 10 integriert oder direkt an diesen angeflanscht. Die mechanische Halteeinrichtung 50 sowie die elektrische Bremseinrichtung 40 können Teile oder Module eines Motorbaukastens für den Antrieb 10 sein.

Der dargelegte Antrieb 10 fungiert vorzugsweise als Direktantrieb, wodurch die Komplexität herkömmlicher Antriebsstränge (bestehend beispielsweise aus einem Elektromotor, einer Motorkupplung inkl. Bremse, einem Untersetzungsgetriebe und einer Maschinenkupplung) deutlich reduziert werden kann. Dabei befindet sich der Antrieb 10, insbesondere der Stator 12 des Antriebs 10, vorzugsweise direkt an oder in der Arbeitsmaschine 20.

Der dargelegte Antrieb 10 lässt sich modular aufbauen. Der Elektromotor als Basismodul wird in diesem Sinne durch die mechanische Halteeinrichtung 50 und die elektrische Bremseinrichtung 40 als Module erweitert. Der Antrieb 10 kann bei Bedarf durch weitere Module erweitert werden. Mögliche Erweiterungsmodule umfassen beispielsweise ein Leistungssteigerungsmodul mit Antriebsmitteln (Rotor und Stator) zur Erhöhung der Leistung des Basismoduls. Damit die Module miteinander kombinierbar sind, weisen sie technisch kompatible Komponenten, insbesondere miteinander verbindbare bzw. aneinander flanschbare Gehäuse auf. Durch eine solche modulare Bauweise kann die Wiederholhäufigkeit baugleicher Teile (Motorscheiben, Statorscheiben, Statorbleche, Statorspulen usw.) erhöht werden, wodurch die Kosten reduziert und die Zuverlässigkeit der Vorrichtung erhöht werden können.

Soweit anwendbar, können alle einzelnen Merkmale, die in den Ausführungsbeispielen dargestellt sind, miteinander kombiniert und/oder ausgetauscht werden, ohne den durch die Ansprüche definierten Schutzumfang der Erfindung zu verlassen.

### Bezugszeichenliste

- 10: Antrieb/Direktantrieb
- 11: Rotor
- 12: Stator
- 13: speisender Umrichter
- 20: Arbeitsmaschine
- 30: Haltevorrichtung
- 31: Steuereinrichtung
- 40: elektrische Bremseinrichtung
- 50: mechanische Halteeinrichtung

## Patentansprüche

1. Verfahren zum Abbremsen einer Maschine, die einen Antrieb (10), vorzugsweise einen Direktantrieb, mit einem Elektromotor und eine Arbeitsmaschine (20) für die Metallbearbeitung aufweist, wobei der Antrieb (10) eingerichtet ist, um eine Welle der Arbeitsmaschine (20) drehbar anzutreiben, und das Verfahren aufweist:
Abbremsen der Maschine reibungsfrei aus einem Arbeitszustand in einen Haltezustand, in dem die Welle der Arbeitsmaschine (20) im Wesentlichen stillsteht, mittels einer elektrischen Bremseinrichtung (40);
Arretieren der Maschine mechanisch im Haltezustand mittels und durch Betätigen einer mechanischen Halteeinrichtung (50); wobei
die elektrische Bremseinrichtung (40) und die mechanische Halteeinrichtung (50) so gesteuert werden, dass im Wesentlichen die gesamte Bewegungsenergie aus dem Arbeitszustand von der elektrischen Bremseinrichtung (40) umgewandelt wird, während die mechanische Halteeinrichtung (50) nur im Haltezustand der Maschine betätigt wird,
**dadurch gekennzeichnet, dass**
ein speisender Umrichter (13) vorgesehen ist, der den Elektromotor des Antriebs (10) im Arbeitszustand mit Leistung versorgt und vorzugsweise eine Funktion zum Abbremsen der Arbeitsmaschine (20) in einem Normalbetriebszustand aufweist, wobei
in einem außerordentlichen Betriebszustand der speisende Umrichter (13) galvanisch vom Elektromotor getrennt und die Maschine in den Haltezustand abgebremst wird, indem Wicklungen des Elektromotors über einen Bremswiderstand oder eine Widerstand/Kondensator-Schaltung oder direkt kurzgeschlossen werden oder eine externe Gleichspannungsquelle aufgeschaltet wird.

2. Verfahren nach Anspruch 1, **dadurch gekennzeichnet, dass** der außerordentliche Betriebszustand eine Störung des speisenden Umrichters (13) umfasst.

3. Verfahren nach einem der vorigen Ansprüche, **dadurch gekennzeichnet, dass** die mechanische Halteeinrichtung (50) die Maschine im Haltezustand formschlüssig und/oder kraftschlüssig arretiert, wobei die Betätigung der mechanischen Halteeinrichtung (50) vorzugsweise elektrisch, mechanisch, hydraulisch oder pneumatisch erfolgt.

4. Vorrichtung zum Abbremsen einer Maschine, die einen Antrieb (10), vorzugsweise einen Direktantrieb, mit einem Elektromotor und eine Arbeitsmaschine (20) für die Metallbearbeitung aufweist, wobei der Antrieb (10) eingerichtet ist, um eine Welle der Arbeitsmaschine (20) drehbar anzutreiben, und die Vorrichtung aufweist:
eine elektrische Bremseinrichtung (40), die eingerichtet ist, um die Maschine aus einem Arbeitszustand reibungsfrei in einen Haltezustand, in dem die Welle der Arbeitsmaschine (20) im Wesentlichen stillsteht, abzubremsen;
eine mechanische Halteeinrichtung (50), die eingerichtet ist, um die Maschine bei Betätigung der mechanischen Halteeinrichtung (50) im Haltezustand mechanisch zu arretieren; und
eine Steuereinrichtung (31), die eingerichtet ist, um die elektrische Bremseinrichtung (40) und die mechanische Halteeinrichtung (50) so zu steuern, dass im Wesentlichen die gesamte Bewegungsenergie aus dem Arbeitszustand von der elektrischen Bremseinrichtung (40) umgewandelt wird, während die mechanische Halteeinrichtung (50) nur im Haltezustand der Maschine betätig wird
**dadurch gekennzeichnet, dass**
der Antrieb (10) einen speisenden Umrichter (13) aufweist, der eingerichtet ist, um den Elektromotor des Antriebs (10) im Arbeitszustand mit Leistung zu versorgen und vorzugsweise eine Funktion zum Abbremsen der Arbeitsmaschine (20) in einem Normalbetriebszustand aufweist, wobei
die elektrische Bremseinrichtung (40) und/oder die Steuereinrichtung (31) so eingerichtet ist, dass sie in einem außerordentlichen Betriebszustand den speisenden Umrichter (13) galvanisch vom Elektromotor trennt und die Maschine in den Haltezustand abbremst, indem sie Wicklungen des Elektromotors über einen Bremswiderstand oder eine Widerstand/Kondensator-Schaltung oder direkt kurzschließt oder eine externe Gleichspannungsquelle aufschaltet.

5. Vorrichtung nach Anspruch 4, **dadurch gekennzeichnet, dass** der außerordentliche Betriebszustand eine Störung des speisenden Umrichters (13) umfasst.

6. Vorrichtung nach Anspruch 4 oder 5, **dadurch gekennzeichnet, dass** die Arbeitsmaschine (20) ein Gehäuse oder Gestell aufweist, der Antrieb (10) einen Stator (12) und einen Rotor (11) aufweist, wobei der Stator (12) direkt am Gehäuse bzw. Gestell befestigt ist.

7. Vorrichtung nach einem der Ansprüche 4 bis 5, **dadurch gekennzeichnet, dass**
der Antrieb (10) einen Stator (12) und einen Rotor (11) aufweist, wobei der Rotor (11) direkt mit der Welle der Arbeitsmaschine (20) verbunden ist, vorzugsweise sind der Rotor (11) und die Welle einstückig ausgebildet.

8. Vorrichtung nach einem der Ansprüche 4 bis 7, **dadurch gekennzeichnet, dass** der Antrieb (10) ein Gehäuse aufweist, in dem die mechanische Halteeinrichtung (50) integriert oder an das die mechanische Halteeinrichtung (50) angeflanscht ist.

9. Vorrichtung nach einem der Ansprüche 4 bis 8, **dadurch gekennzeichnet, dass** die mechanische Halteeinrichtung (50) so eingerichtet ist, dass sie die Maschine im Haltezustand formschlüssig und/oder kraftschlüssig arretiert, wobei die Betätigung der mechanischen Halteeinrichtung (50) vorzugsweise elektrisch, mechanisch, hydraulisch oder pneumatisch erfolgt.

10. Vorrichtung nach einem der Ansprüche 4 bis 9, **dadurch gekennzeichnet, dass** der Elektromotor des Antriebs (10) ein Synchronmotor oder Torquemotor ist.

11. Vorrichtung nach einem der Ansprüche 4 bis 10, **dadurch gekennzeichnet, dass** die Arbeitsmaschine (20) eine Rolle, vorzugsweise Arbeitswalze, Stützwalze, Spannrolle und/oder Transportrolle in einem Walzwerk, eine Haspeleinrichtung, Beschichtungsanlage, fliegende Schere und/oder Winde aufweist.

## Claims

1. Method for decelerating a machine which comprises a drive (10), preferably a direct drive, with an electric motor and a working machine (20) for metal processing, wherein the drive (10) is arranged to rotationally drive a shaft of the working machine (20) and the method comprises:
braking the machine free of friction from a working state to a stopping state, in which the shaft of the working machine (20) is substantially stationary, by means of an electrical braking device (40);
mechanically locking the machine in the stopped state by means of and through actuation of a mechanical holding device (50); wherein
the electrical braking device (40) and the mechanical holding device (50) are so controlled that substantially the entire kinetic energy from the working state is converted by the electrical braking device (40), whilst the mechanical holding device (50) is actuated only in the stopped state of the machine,
**characterised in that**
a power-supplying converter (13) is provided, which supplies the electric motor of the drive (10) in the working state with power and preferably comprises a function for braking the working machine (20) in a normal operating state, wherein in an unusual operating state the power-supplying converter (13) is electrically separated from the electric motor and the machine is braked to the stopped state **in that** windings of the electric motor are shortcircuited by way of a brake resistor or a resistor/capacitor circuit or directly or an external direct voltage source is switched on.

2. Method according to claim 1, **characterised in that** the unusual operating state comprises a disturbance of the power-supplying converter (13).

3. Method according to one of the preceding claims, **characterised in that** the mechanical holding device (50) locks the machine in the stopped state by mechanically positive couple and/or friction couple, wherein the actuation of the mechanical holding device (50) preferably takes place electrically, mechanically, hydraulically or pneumatically.

4. Device for decelerating a machine, which comprises a drive (10), preferably a direct drive, with an electric motor and a working machine (20) for metal processing, wherein the drive (10) is arranged to rotationally drive a shaft of the working machine (20) and a device comprises:
an electrical braking device (40) which is arranged to brake the machine free of friction from a working state to a stopped state in which the shaft of the working machine (20) is substantially stationary;
a mechanical holding device (50) which is arranged to mechanically lock the machine in the stopped state when the mechanical holding device (50) is actuated; and
a control device (31) which is arranged to so control the electrical braking device (40) and the mechanical holding device (50) that substantially the entire kinetic energy from the working state is converted by the electrical braking device (40), whilst the mechanical holding device (50) is actuated only in the stopped state of the machine,
**characterised in that**
the drive (10) comprises a power supplying converter (13) which is arranged to supply the electric motor of the drive (10) in the working state with power and preferably comprises a function for braking the working machine (20) in a normal operating state, wherein
the electrical braking device (40) and/or the control device (31) is or are so arranged that it or they in an unusual operating state of the power-supplying converter (13) are electrically separated from the electric motor and the machine is braked into the stopped state **in that** it short-circuits windings of the electric motor by way of a braking resistor or a resistor/capacitor circuit or directly or switches on an external direct voltage source.

5. Device according to claim 4, **characterised in that** the unusual operating state comprises a disturbance of the power-supplying converter (13).

6. Device according to claim 4 or 5, **characterised in that** the working machine (20) comprises a housing or a chassis, and the drive comprises a stator (12) and a rotor (11), wherein the stator (12) is directly secured to the housing or chassis.

7. Device according to one of claims 4 and 5, **characterised in that** the drive (10) comprises a stator (12) and a rotor (11), wherein the rotor (11) is directly connected with the shaft of the working machine (20), the rotor (11) and the shaft preferably being formed integrally.

8. Device according to any one of claims 4 to 7, **characterised in that** the drive (10) comprise a housing in which the mechanical holding device (50) is integrated or on which the mechanical holding device (50) is flange-mounted.

9. Device according to any one of claims 4 to 8, **characterised in that** the mechanical holding device (50) is so arranged that it locks the machine in the stopped state by mechanically positive couple and/or friction couple, wherein the actuation of the mechanical holding device (50) preferably takes place electrically, mechanically, hydraulically or pneumatically.

10. Device according to any one of claims 4 to 9, **characterised in that** the electric motor (10) is a synchronous motor or torque motor.

11. Device according to any one of claims 4 to 10, **characterised in that** the working machine (20) comprises a roller, preferably working roll, backing roll, tensioning roller and/or transport roller in a rolling mill, a coiling device, a coating plant, flying shears and/or a winch.

## Revendications

1. Procédé destiné à la décélération d'une machine qui présente un entraînement (10), de préférence un entraînement direct qui comprend un moteur électrique et une machine entraînée par un engin moteur (20) pour le travail du métal ; dans lequel l'entraînement (10) est conçu pour entraîner en rotation un arbre de la machine entraînée par un engin moteur (20) ; et le procédé présente le fait de :
soumettre la machine à une décélération en l'absence de friction à partir d'un état de travail jusque dans un état de maintien dans lequel l'arbre de la machine entraînée par un engin moteur (20) reste essentiellement immobile, au moyen d'un mécanisme de freinage électrique (40) ;
arrêter la machine par voie mécanique dans l'état de maintien au moyen d'un dispositif mécanique de maintien (50) et par l'intermédiaire d'une activation du mécanisme en question; dans lequel
le mécanisme de freinage électrique (40) et le dispositif mécanique de maintien (50) sont commandés d'une manière telle que de manière essentielle l'énergie cinétique dans son ensemble est transformée à partir de l'état de travail par le mécanisme de freinage électrique (40), tandis que le dispositif mécanique de maintien (50) n'est actionné que dans l'état de maintien de la machine ;
**caractérisé en ce que** l'on prévoit un onduleur d'alimentation (13) qui alimente avec de l'énergie le moteur électrique de l'entraînement (10) dans l'état de travail et qui présente de préférence une fonction destinée à la décélération de la machine entraînée par un engin moteur (20) dans un état de fonctionnement normal ; dans lequel
dans un état de fonctionnement extraordinaire, l'onduleur d'alimentation (13) est soumis à une séparation de type galvanique par rapport au moteur électrique et la machine est soumise à une décélération dans l'état de maintien par l'intermédiaire d'une mise en court-circuit des enroulements du moteur électrique en utilisant une résistance de freinage ou un circuit de type résistance/condensateur ou encore de manière directe ou par l'intermédiaire du branchement d'une source externe de courant continu.

2. Procédé selon la revendication 1, **caractérisé en ce que** l'état de fonctionnement extraordinaire comprend un dysfonctionnement de l'onduleur d'alimentation (13).

3. Procédé selon l'une quelconque des revendications précédentes, **caractérisé en ce que** le dispositif mécanique de maintien (50) arrête la machine dans l'état de maintien par complémentarité de forme et/ou par adhérence ; dans lequel l'actionnement du dispositif mécanique de maintien (50) a lieu de préférence par voie électrique, par voie mécanique, par voie hydraulique ou par voie pneumatique.

4. Dispositif destiné à la décélération d'une machine qui présente un entraînement (10), de préférence un entraînement direct qui comprend un moteur électrique et une machine entraînée par un engin moteur (20) pour le travail du métal ; dans lequel l'entraînement (10) est conçu pour entraîner en rotation un arbre de la machine entraînée par un engin moteur (20) ; et le dispositif présente :
un mécanisme de freinage électrique (40) qui est conçu pour soumettre la machine à une décélération en l'absence de friction à partir d'un état de travail jusque dans un état de maintien dans lequel l'arbre de la machine entraînée par un engin moteur (20) reste essentiellement immobile ;
un dispositif mécanique de maintien (50) qui est conçu pour arrêter la machine par voie mécanique dans l'état de maintien au moyen par l'intermédiaire d'une activation du dispositif mécanique de maintien (50) ; et
un mécanisme de commande (31) qui est conçu pour commander le mécanisme de freinage électrique (40) et le dispositif mécanique de maintien (50) d'une manière telle que de manière essentielle l'énergie cinétique est transformée dans son ensemble à partir de l'état de travail par le mécanisme de freinage électrique (40), tandis que le dispositif mécanique de maintien (50) n'est actionné que dans l'état de maintien de la machine ;
**caractérisé en ce que** l'entraînement (10) présente un onduleur d'alimentation (13) qui est conçu pour alimenter avec de l'énergie le moteur électrique de l'entraînement (10) dans l'état de travail et présente de préférence une fonction destinée à la décélération de la machine entraînée par un engin moteur (20) dans un état de fonctionnement normal ; dans lequel
le mécanisme de freinage électrique (40) et/ou le mécanisme de commande (31) est/sont conçus d'une manière telle que, dans un état de fonctionnement extraordinaire, il(s) sépare(nt) l'onduleur d'alimentation (13) par voie galvanique par rapport au moteur électrique et soumet(tent) la machine à une décélération dans l'état de maintien par le fait de mettre en court-circuit des enroulements du moteur électrique en utilisant une résistance de freinage ou un circuit de type résistance/condensateur ou encore de manière directe ou procède(nt) au branchement d'une source externe de courant continu.

5. Dispositif selon la revendication 4, **caractérisé en ce que** l'état de fonctionnement extraordinaire comprend un dysfonctionnement de l'onduleur d'alimentation (13).

6. Dispositif selon la revendication 4 ou 5, **caractérisé en ce que** la machine entraînée par un engin moteur (20) présente un logement ou un bâti, l'entraînement (10) présente un stator (12) et un rotor (11) ; dans lequel le stator (12) est fixé de manière directe au logement, respectivement au bâti.

7. Dispositif selon l'une quelconque des revendications 4 à 5, **caractérisé en ce que** l'entraînement (10) présente un stator (12) et un rotor (11) ; dans lequel le rotor (11) est relié de manière directe à l'arbre de la machine entraînée par un engin moteur (20) ; de préférence, le rotor (11) et l'arbre sont réalisés en une seule pièce.

8. Dispositif selon l'une quelconque des revendications 4 à 7, **caractérisé en ce que** l'entraînement (10) présente un logement dans lequel est intégré le dispositif mécanique de maintien (50) ou contre lequel est fixé par bride le dispositif mécanique de maintien (50).

9. Dispositif selon l'une quelconque des revendications 4 à 8, **caractérisé en ce que** le dispositif mécanique de maintien (50) est conçu d'une manière telle qu'il arrête la machine dans l'état de maintien la machine par complémentarité de forme et/ou par adhérence ; dans lequel l'actionnement du dispositif mécanique de maintien (50) a lieu de préférence par voie électrique, par voie mécanique, par voie hydraulique ou par voie pneumatique.

10. Dispositif selon l'une quelconque des revendications 4 à 9, **caractérisé en ce que** le moteur électrique de l'entraînement (10) représente un moteur synchrone ou un moteur-couple.

11. Dispositif selon l'une quelconque des revendications 4 à 10, **caractérisé en ce que** la machine entraînée par un engin moteur (20) présente un galet ou un rouleau, de préférence un cylindre de travail, un cylindre de support, un galet de tension et/ou un rouleau de transport dans une installation sidérurgique, un mécanisme de bobinage, une installation d'enduction, une cisaille volante et/ou un dévidoir.
